(19) Europäisches Patentamt
European Patent Office
Office européen des brevets

(11) EP 2 772 737 A1

(12) **EUROPEAN PATENT APPLICATION**

(43) Date of publication:
03.09.2014 Bulletin 2014/36

(51) Int Cl.:
G01K 11/24 (2006.01)    G01P 5/24 (2006.01)
G01N 29/024 (2006.01)    G01F 1/66 (2006.01)

(21) Application number: 13157222.4

(22) Date of filing: 28.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Siemens Aktiengesellschaft
80333 München (DE)

(72) Inventors:
• A V, Varun
560102 Bangalore (IN)
• Das, Saptarshi
560102 Bangalore (IN)

(54) **Method and system for estimating a time of flight of a signal**

(57) The present invention relates to a system and a method of estimating a time of flight of a signal, wherein the method comprises, transmitting a plurality of the signals (30) from a plurality of transmitters (15) such that the plurality of signals (30) travel different paths, receiving the plurality of signals (30) at one or more receivers (20), wherein the plurality of signals (30) are transmitted such that the plurality of signals (30) are received at the same time instance, and estimating the time of flight of a respective said plurality of signal (30) as a function of a time of reception of the plurality of signals (30) and a respective time instance of transmission of the respective said plurality of signal (30).

FIG 1

**Description**

The present invention relates to a method and system for determining a time of flight of a signal.

Time of flight based applications measure the time it takes for an object, particle or acoustic, electromagnetic or other wave to travel a distance though a medium. For example, electromagnetic or magnetic waves can be passed through a medium for measuring density, velocity or temperature of different sections of the medium. One example of such systems is an acoustic pyrometer, which is used to measure the temperature distribution over an area of interest in a non-invasive manner. Acoustic pyrometers are based on the principle that sound propagate with different velocity in different temperature. Example applications of acoustic pyrometer consist of measuring the temperature field across a blast furnace, gas turbines etc.

For example, the time of flight between different pairs of points in a circumference of an area of interest is measured, and further the measured data is used to estimate the velocity map over the cross section of interest. Considering one transmitter and one receiver at a time, the time of flight between several pairs of points in the circumference of the area of interest is measured. Typically cross correlation between the transmitted signal and the received signal is used to determine the time of flight. Using the time of flight measurement between several points in the circumference, and employing suitable inverse reconstruction method, the velocity field of the area of interest is estimated.

In such systems, the received signal generally comprises two components of noise. The first component is the ambient noise of the physical system and the second is the readout noise of the receiver or detector. For example, sources of ambient noise can include, the disturbances created by the medium, the disturbances created by the system, for example vibrations. The second component of the noise can be caused due to A/D conversion, sensitivity of the receiver sensors, dynamic range of the receiver sensors, and the like.

The object of the invention is to increase a signal to noise of the received signal so that the time of flight of the signal can be estimated more accurately and reliably.

The object of the invention is achieved by a system and a method for estimating a time of flight of a signal, wherein the method comprises, transmitting a plurality of the signals from a plurality of transmitters such that the plurality of signals travel different paths, receiving the plurality of signals at one or more receivers, wherein the plurality of signals 30 are transmitted such that the plurality of signals 30 are received at the same time instance, and estimating the time of flight of a respective said plurality of signal 30 as a function of a time of reception of the plurality of signals 30 and a respective time instance of transmission of the respective said plurality of signal 30.

The signals are transmitted by different transmitters and the signals travel different paths. The signals are transmitted such that the signals arrive at the receiver at the same instance of time. The time of flight of the respective signals is estimated as a function of the time of reception of the signals and a respective time instance of transmission of the signals. The signals received at the same instance of time has increased signal to noise ratio. This achieves in estimating the time of flight of the respective signals more accurately and reliably.

According to an embodiment, the transmission of the respective said plurality of signals is triggered at different time instances. The transmissions of the signals are triggered at different time instances so that the signals arrive at the receiver at the same time instance. This is due to the signals having different travel paths.

According to another embodiment, the different time instances are determined responsive to a feedback of reception of the plurality of signals. Since the signals are to be received at the same time instance, the different time instances for transmitting the different signals are determined responsive to the feedback of reception of the plurality of the signals.

According to yet another embodiment, wherein the different time instances are determined by applying a derivative free optimization technique. This is because the values of the physical parameters influencing the reception of the signals at the receiver are not explicitly known.

According to yet another embodiment, the time instance of transmission of one of the plurality of signal is a reference time and the respective time instances of transmission of the other plurality of signals are delayed relative to the reference time by a respective time delay. Delaying the transmissions of the other signals relative to the time instance of transmission of one of the signals achieve in synchronizing the transmission such that the signals arrive at the receiver at the same time instance.

According to yet another embodiment, wherein the respective time of flight of the respective plurality of signals is estimated by subtracting the respective time delay of transmission from the time of reception of the plurality of signals. The time delay of transmission is the delay of transmission from the reference time.

According to yet another embodiment, wherein the plurality of signals are received at a single receiver.

According to yet another embodiment, wherein the plurality of signals are received at a plurality of receivers.

According to yet another embodiment, the method further comprises filtering spatially a respective received signal outputted by the respective said plurality of receivers to obtain a respective filtered signal, and combining the respective filtered signals to obtain the output signal, the output signal (35) representing the plurality of signals (30) transmitted. This achieves in reducing the effect of echo on the signals.

According to yet another embodiment, the method further comprises estimating a profile of a physical parameter of a medium between the transmission and the reception of the plurality of signals using the time of flight of the respective said plurality of signals.

According to yet another embodiment, the plurality of signals are one from the group consisting of an electromagnetic wave and mechanical wave. The signal can be an electromagnetic wave, such as light or a mechanical wave, such as an acoustic signal.

According to yet another embodiment, the method is applied to estimate a profile of a physical parameter of the medium.

According to yet another embodiment, the physical parameter is at least one of the group consisting of a velocity, a density and a temperature.

Another embodiment includes, a system for estimating a time of flight of a signal, wherein the system comprises a plurality of transmitters for transmitting a plurality of signals such that the plurality of signals travel different paths, at least one receiver adapted to receive the plurality of signals, wherein the plurality of transmitters are adapted to transmit the plurality of signals such that the plurality of signals are received at at the at least one receiver at the same time instance, and a controller operably coupled to the at least one receiver and adapted to estimate the time of flight of a respective said plurality of signal as a function of a time of reception of the plurality of signals and a respective time instance of transmission of the respective said plurality of signal.

According to an embodiment, the plurality of transmitters are controllable for transmitting the plurality of signals at different time instances.

According to another embodiment, the controller is operably coupled to the plurality of transmitters, the controller adapted to determine the different time instances responsive to a feedback of reception of the plurality of signals and adapted to generate a respective control signal to be provided to the respective plurality of transmitters for triggering the transmission of the plurality of respective signals at different time instances.

According to an embodiment, the controller is adapted to determine the different time instances by applying a derivative free optimization technique.

According to another embodiment the controller is configured to estimate a profile of a physical parameter of the medium within the area of interest.

According to another embodiment the physical parameter is at least one of the group consisting of a velocity, a density and a temperature and/or the like of the medium.

The present invention is further described hereinafter with reference to illustrated embodiments shown in the accompanying drawings, in which:

FIG 1    illustrates an exemplary block diagram of a system for estimating a time of flight of a signal according to an embodiment herein,

FIG 2    illustrates an exemplary arrangement of a plurality of transmitters and a receiver around an area of interest according to an embodiment herein,

FIG 3a   is a graphical representation illustrating a transmission of a plurality of acoustic signals at the same time instance,

FIG 3b   is a graphical representation illustrating a reception of a plurality of acoustic signals when the plurality of the acoustic signals are transmitted at the same time instance,

FIG 3c   is a graphical representation illustrating a noise level of an output signal outputted by a receiver when a plurality of acoustic signals are received at different time instances,

FIG 4a   is a graphical representation illustrating a transmission of a plurality of acoustic signals at different time instances according to an embodiment herein,

FIG 4b   is a graphical representation illustrating a reception of a plurality of acoustic signals when the plurality of the acoustic signals are transmitted at different time instances,

FIG 4c   is a graphical representation illustrating a noise level of an output signal outputted by a receiver when a plurality of acoustic signals are received at the same time instance, and

FIG 5    is flow diagram illustrating a method of estimating a time of flight of a signal according to an embodiment herein.

The invention is based on the concept of increasing the signal to noise ratio of a signal for determining the time of flight of the signal transmitted from a first location and received at a second location. The signal to noise ratio is increased by transmitting a plurality of signals such that the signals travel different paths and are received at the same time instance. The signals can be mechanical waves or electromagnetic waves. The signals are transmitted using a plurality of sources such that the signals are transmitted by different individual transmitters. The acoustic signals can be received at a single receiver or at a plurality of receivers. The acoustic signals received at the same instance increases the signal to noise ratio of the received signal and in case the signals are received at more than one receiver than the combined signal of the received signals. The transmissions of the acoustic signals are triggered at different time instances such that the signals are received at the same time instance. To achieve this, the different time instances are determined using a derivative free optimization technique. The time of flight of the respective acoustic signals are estimated by subtracting the time delay of transmission of the respective acoustic signal from the time of reception of the acoustic signal.

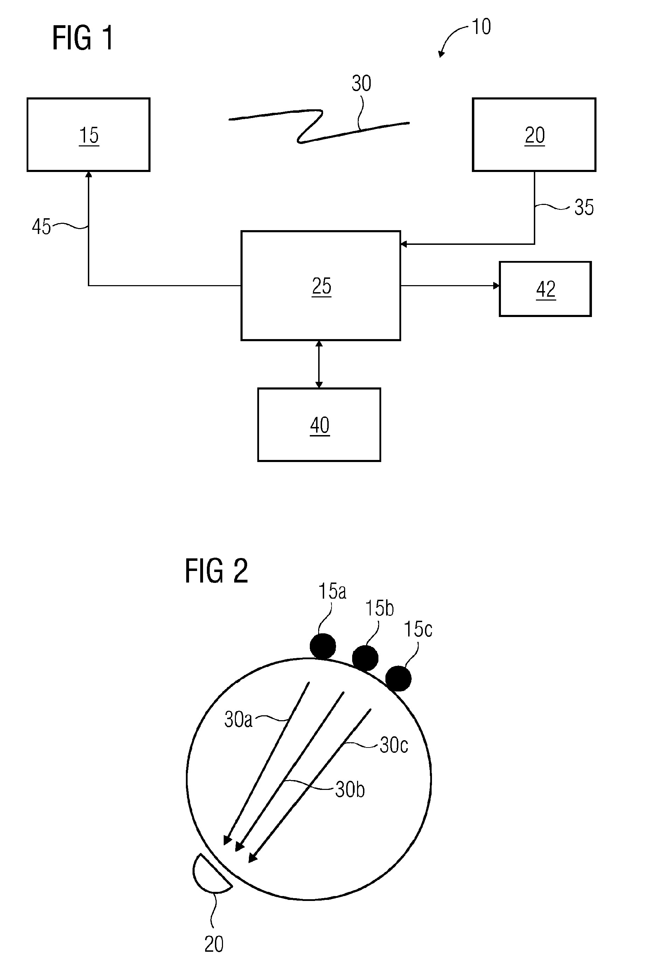

FIG 1 illustrates an exemplary block diagram of a system for estimating a time of flight of a signal according to an embodiment herein. The system 10 comprises a plurality of transmitters 15, a plurality of receivers 20 and a controller 25. The plurality of transmitters 15 and the plurality of receivers are operably coupled to the controller 25. The transmitters 15 are configured to transmit a respective signal 30 and the receivers 20 are adapted to receive the transmitted signal 30. The signal 30 can be a mechanical wave such as an acoustic signal or an electromagnetic wave such as visible light, infrared and the like. In the shown example of FIG 1, system 10 is illustrated as an acoustic pyrometer and the signal 30 is an acoustic signal. Acoustic pyrometers are generally used for estimating a profile of a physical parameter of a medium by propagating acoustic signals through the medium. For example, generally, the transmitters 15 and the receivers 20 are arranged in a circumferential manner around the region of interest for which a profile of a physical parameter is to be estimated. Transmitters 15 corresponding to a section of the region of interest are triggered for transmitting the acoustic signal 30 and the receivers 20 diagonally opposite to the transmitters 15 are adapted to receive the transmitted acoustic signal 30. The controller 25 is configured to control the transmitters for triggering the transmission of the acoustic signal 30. The receivers 20 are configured to output a respective output signal 35 indicative of the received acoustic signal 30. The controller 25 is configured to receive the output signal 35 and estimate the time of flight of the respective signal. The controller is operably coupled to a memory device 40 for storing the time of flight of a respective acoustic signal 30. The term 'time of flight" used herein refers to the time it takes for the signal to travel from the transmitter 15 to the receiver 20.

Referring still to FIG 1, according to an aspect herein, using the stored time of flight of respective signals 30 corresponding to different sections of the area of interest, and by employing suitable inverse reconstruction method, the controller 25 is configured to estimate a profile of a physical parameter of the medium within the area of interest. For example, the physical parameter can be velocity, density, temperature and the like. In certain implementation, the path travelled by the acoustic signals 30 may not be rectilinear due to refraction. Thus, to estimate the profile of the physical parameter accurately, the estimation can include the use of path bending models. This reduces the effect of the refraction. The profile of the physical parameter of the medium can be displayed on a display device 42 operably coupled to the controller 25.

Referring still to FIG 1, according to an aspect herein, for estimating the time of flight of the acoustic signals 30 the signal to noise ratio of the output signal 35 is increased. This is achieved by adapting the controller 25 to trigger a plurality of transmitters 15 for transmitting a plurality of acoustic signals 30 such that the plurality of acoustic signals 30 are received at the same instance of time. The acoustics signals 30 transmitted by different transmitters will travel different paths. Thus, the transmitters 15 will have to be controlled such that the acoustic signals 30 are received at the receivers 20 at the same instance of time. The transmitted acoustic signals 30 can be received at the same instance of time at one single receiver 20 or a plurality of receivers 20. In the example of FIG 1, the acoustic signals are received at a single receiver 20 and the output signal 35 outputted by the receiver 20 has increased signal to noise ratio since the different acoustic signals 30 are received at the same time instance. However, in another aspect, the acoustic signals 30 can be received at a plurality of respective receivers 20. In this case, the respective receivers 20 will output the respective received signal. The respective received signals outputted by the respective receivers 20 are combined to obtain the output signal 35.. The received signals outputted by the respective receivers 20 are combined in such a manner so that the signal to noise ratio of the output signal 35 is increased. For example, the received signals outputted by the respective receivers 20 can be combined by the controller 20. The term output signal used herein refers to the signal comprising the received component of all the plurality of acoustic signals 30 transmitted. In aspects where a single receiver 20 is used, the output signal 35 is the signal outputted by the receiver 20. In aspects, where a plurality of receivers 20 are used, the output signal is the signal obtained after combining the received signals outputted by the respective receivers 20.

The increased signal to noise ratio of the output signal 35 enables in indentifying the received acoustic signal 30 accurately. Thereafter, the controller 25 is configured to estimate the time of flight of the respective individual acoustic signals 30 as a function of the time of transmission of the individual acoustic signals 30 and the time of reception of the acoustic signals 30. The process of triggering the transmitters 15 and the estimation of the time of flight of the individual acoustic signals 30 will be explained in detail with reference to FIG 2.

FIG 2 illustrates an exemplary arrangement of a plurality of transmitters and a receiver around an area of interest according to an embodiment herein. In the shown example of FIG 2, a plurality of transmitters 15 and a receiver 20 are arranged at a circumference of an area of interest. The transmitters 15 and the receiver 30 correspond to a section of the area of interest for estimating the time of flight. For estimating the time of flight of different sections, multiple sets of transmitters and receivers can be deployed or a single set can be rotated to cover different sections. In the shown example of FIG 2 three transmitters 15a, 15b, 15c are illustrated for example purposes only and it will be apparent to a skilled person that any number of transmitters 15 can be deployed. The transmitters 15a, 15b, 15c are adapted to transmit the respective acoustic signals 30a, 30b, 30c and the receiver 20 is adapted to receive the transmitted acoustic signals 30a, 30b, 30c. In the shown example of FIG 2, it can be seen that the acoustic signals 30a, 30b, 30c travel different paths.

Referring now to FIG 1 and FIG 2, the controller 25 is configured to trigger the transmitters 15a, 15b, 15c for transmitting the respective acoustic signals 30a, 30b, 30c such that the acoustic signals 30a, 30b, 30c are received at the receiver 20 at the same instance of time. Since the acoustic signals 30a, 30b, 30c arrive at the receiver 20 at the same time, the received signal $r(t)$ can be expressed by the following equation:

$$r(t) = \sum_{i=1}^{N_T} a_i\, s_i(t - \Delta t_i) + \eta(t),\, t \in [0,T] \qquad (1)$$

Where, $r(t)$ is the received signal, $N_T$ is the number of transmitters 15, $a_i$ is the attenuation coefficient, $s_t(t)$ is the acoustic signal 30 that reaches the receiver 20, $\Delta T_t$ is the time of flight from the transmitter 15 to the receiver 20, $t$ is the sampling time, $\eta$ is the noise, $T$ is the time period of the signal.

The noise component $\eta$ includes noise from the ambience and the receiver 20 noise. The attenuation of the acoustic signal can be ignored since only time of flight of the acoustic signal is required to be estimated. The echoing of the acoustic signals $s_t(t)$ is not considered in equation (1) as the same can be reduced by spatial filtering and by reasonably selecting the number of transmitters 15 and the time period $T$ of the received signal $r(t)$. Selecting the time period $T$ provides the advantage of averaging over multiple measurements.

Referring still to FIG 1, and FIG 2, the transmitters 15 are required to be triggered at different time instances so that the acoustic signals 30a, 30b, 30c having different travel paths are received at the same instance of time. Accordingly, equation (1) can be re-written to express the different time of transmission of the acoustic signals as follows:

$$r(t) = \sum_{i=1}^{N_T} a_i s_i(t - \Delta t_i + \delta_i) + \eta(t),\quad t \in [0,T] \qquad (2)$$

Where, $r(t)$ is the received signal, $N_T$ is the number of transmitters 15, $a_i$ is the attenuation coefficient, $s_i$ is the acoustic signal that reaches the receiver 20, $\Delta t_t$ is the time of flight from the transmitter 15 to the receiver 20, $\delta_i$ is the time instance of transmission of the acoustic signal $s_i$, $t$ is the sampling time, $\eta$ is the noise, $T$ is the time period of the signal

As the acoustic signals 30 will have to be transmitted at different time instances, according to one aspect, the time instance of transmission $\delta_i$ of one of the transmitters 15 can be considered as a reference time and the time instance of transmission of the other transmitters 15 can be delayed relative to the reference time such that the acoustic signals 30 reach the receiver 20 at the same instance of time. Thus, one or more transmitters 15 will be triggered to transmit the acoustic signal 30 after a time delay from the reference time. The time instances of transmission $\delta_i$ of the acoustic signals 30 is required to be optimized such that the acoustics signals 30 reach the receiver 20 at the same instance of time. By optimizing the time instances of transmission $\delta_i$, such that the acoustic signals 30 are received at the receiver at the same instance of time, the signal to noise ratio of the output signal 35 is increased. This achieves in overcoming the readout noise at the receiver 20 and also the ambience noise. The ambience noise can also be overcome by spatially filtering the output signal 35 of the receiver, averaging the value of the output signal 35 over multiple measurements, or by other signal processing techniques. In aspects, where a plurality of receivers 20 are used for receiving the plurality of acoustic signals 20, the received signals outputted by the receivers 20 can be spatially filtered to obtain a respective filtered signal. The respective filtered signals can be combined to obtain the output signal comprising the components of all the acoustic signals 20.

According to an aspect, the controller 25 is configured to optimize the time instances of transmission $\delta_i$ responsive to a feedback of reception of the plurality of acoustic signals 30 at the receiver 20. The time instances of transmissions $\delta_i$ are required to be optimized until the acoustic signals 30 are received at the same time instance. According to an aspect, this is achieved by maximizing an objective function derived using 2-norm of the output signal 35 and is represented mathematically by the equations below.

$$\|r\|_2^2 = \int_0^T [r(t)]^2 dt \qquad (3)$$

Where, $\|r\|_2^2$ is the 2-norm of the received signal r(t).

A discrete objective function f which is a function of $\delta_i$ is given by:

$$f\left(\delta_i|_{i=1}^{N_T}\right) = \sum_{n=0}^{N-1}[r(nT/N)]^2 \qquad (4)$$

where, n is the sampling index, $T$ is the time period of the received signal $r(t)$, and $N$ is the number of samples. Since the function $f$ of equation (4) depends on the path delay $\Delta t_t$ of the acoustic signals $s_i(t)$, this variable cannot be considered as an optimization variable since there cannot be a control over this. Thus the objection function is re-written as:

$$\delta_i|_{i=1}^{N_T} = \frac{argmax}{\delta_i|_{i=1}^{N_T}} \quad f\left(\delta_i|_{i=1}^{N_T}\right) \qquad (5)$$

Where, $\delta_i$ is the estimated time instance of transmission of the acoustic signals $s_i$ so that the acoustic signals $s_i$ arrive at the receive 20 at the same time instance. According to an aspect herein, the objective function of equation (5) is maximized using a derivative free optimization technique. The derivative free optimization technique is used herein as the objective function of equation (5) does not have an explicit form.

Optimizing the objective function of equation (5) provides the time instance of transmission of the acoustic signals $s_i$ so that the acoustic signals $s_i$ are received at the receiver 20 at the same time instance. Advantageously, the time instance of transmission $\delta_i$ of one of the transmitters 15 is considered as a reference time. The other transmitters 15 are triggered at the respective time instance of transmission $\delta_i$ so that the acoustic signals $s_i$ arrive at the receiver 20 at the same time instance. Thus, the time instance of transmission of the other transmitters 15 is delayed by a respective delay time from the reference time.

Referring still to FIG 1 and FIG 2, the controller 25, according to an aspect herein is configured to maximize the objective function of equation (5) using a derivative free optimization technique for determining the time instance of transmission $\delta_i$ of the respective transmitters 15. The controller 25 is configured to provide a control signal 45 to the respective transmitter 15 at the time instance of transmission $\delta_i$ estimated using the derivative free optimization technique for triggering the transmission of the respective acoustic signals 30. The transmitters 15 are configured to transmit the acoustic signal 30 responsive to the control signal 45. The optimization is performed until the acoustic signals 30 are received at the same time instance at the receiver 30. Examples of derivative free optimization techniques, include, but not limited to, Nelder-Mead method, SNOBFIT - stable noisy optimization by branch and fit, efficient global optimization of expensive black-box functions, and global optimization of expensive black-box functions with a known lower bound.

Referring still to FIG 1 and FIG 2, the signal to noise ratio of the output signal 35 is increased when the acoustic signals 30 are received at the same time instance. This achieves in detecting the transmitted acoustic signal accurately. The controller 25 is configured to use the time instance of reception of the acoustic signals 30 for estimating the time of flight of the respective acoustic signals 30. According to an aspect herein, the controller 20 is configured to estimate the time of flight of the respective acoustic signal as a function of the time instance of reception of the acoustic signals and the time instance of transmission of the respective acoustic signals 30. For example, the controller 25 is configured to estimate the time of flight of the respective acoustic signals 30 by subtracting a time delay of transmission of the respective acoustic signal 30 from the time instance of reception. The time instance of reception is the time instance when the acoustic signals 30a, 30b, 30c are received at the receiver 20 at the same time instance. The time delay of transmission corresponding to the transmitter 15 whose transmission time is considered as the reference time is zero. This is because the time instance of transmission of one of the acoustic signals 30 is considered as the reference time and thus only the time instance of transmission of the other acoustic signals 30 will be delayed from this reference time.

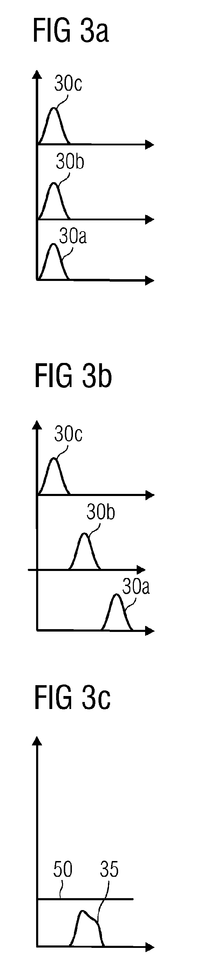

FIGS 3a, 3b 3c are graphical representations illustrating a transmission, reception and noise level respectively when a plurality of acoustic signals are transmitted at the same time instance. In the shown example of FIGS 3a, 3b, 3c, the horizontal axis corresponds to the time and the vertical axis corresponds to the signal strength. In the example of FIG 3a, it is illustrated that the acoustic signals 30a, 30b, 30c are transmitted at the same time instance. As the acoustic signals 30a, 30b, 30c are transmitted at the same time instances, the acoustic signals 30a, 30b, 30c will be received at different time instances at the receiver 20 of FIG 1, as illustrated in FIG 3b. This is due to the different paths travelled by the acoustic signals 30a, 30b, 30c. As the acoustic signals 30a, 30b, 30c are received at different time instances, the signal to noise ratio of the output signal 35 of the receiver 20 is low and thus, the strength of the output signal 35 is less than the strength of the noise 50, as illustrated in FIG 3c. Thus, the detection of reception of the acoustic signals 30 in these circumstances is difficult and may reduce the accuracy of the system 10.

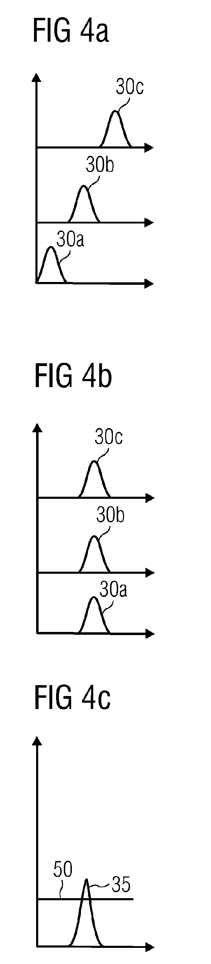

FIGS 4a, 4b 4c are graphical representations illustrating a transmission, reception and a noise level when a plurality of acoustic signals are transmitted at different time instances such that the acoustic signals are received at the same time instance. In the shown example of FIGS 4a, 4b, 4c, the horizontal axis corresponds to the time and the vertical axis corresponds to the signal strength. In the example of FIG 4a, it is illustrated that the acoustic signals 30a, 30b, 30c are transmitted at different time instances. The acoustic signals 30a, 30b, 30c are transmitted at different time instances such that the acoustic signals 30a, 30b, 30c are received at the receiver 20 of FIG 1 at the same time instance, as illustrated in FIG 4b. This is due to the different paths travelled by the acoustic signals 30a, 30b, 30c. As the acoustic signals are received at the same time instance, the signal to noise ratio of the output signal 35 of the receiver 20 is increased and thus, the strength of the output signal 35 is higher than the strength of the noise 50, as illustrated in FIG 4c. Thus, the accuracy of detection of the acoustic signals 30 is increased.

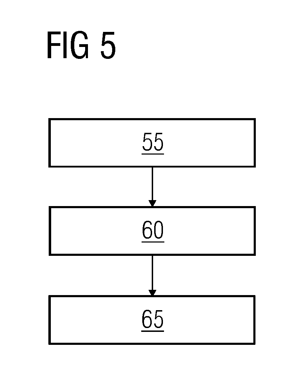

FIG 5 with reference to FIG 1 through FIG 4 is flow diagram illustrating a method of estimating a time of flight of a signal according to an embodiment herein. At block 55, a plurality of signals 30 from a plurality of transmitters 15 are transmitted such that the plurality of signals 30 travel different paths. Next, at block 60, the plurality of signals 30 are received at one or more receivers 20. The plurality of signals 30 are transmitted such that the signals 30 are received at the same time instance. Moving now to block 65, the time of flight of a respective said plurality of signal 30 is estimated as a function of a time of reception of the plurality of signals 30 and a respective time instance of transmission of the respective said plurality of signal 30.

Example 1

The following example illustrates the advantages of deriving the objective function using norm-2 of the output signal of the receiver 20.

In this example it is assumed that the signals received at the receiver are of unit amplitude and the noise is twice the amplitude of the received signal. For explanation purpose, three transmitters and one receiver are considered. The three transmitters transmit three different acoustic signals 30. Table I illustrates a scenario where the acoustic signals arrive at the receiver at different instances of time. Accordingly, 1-norm of the received signal in this scenario is 13 and the 2-norm of the received signal is $\sqrt{35}$.

Table I

| Sample point | n=0 | n=1 | n=2 | n=3 | n=4 |
|---|---|---|---|---|---|
| Desired Signal | 0 | 1 | 0 | 1 | 1 |
| Noise | 2 | 2 | 2 | 2 | 2 |
| Received Signal | 2 | 3 | 2 | 3 | 3 |

Table II illustrates a scenario where two of the acoustic signals arrive at the receiver at the same time instance. Accordingly, 1-norm of the received signal in this scenario is 13 and the 2-norm of the received signal is $\sqrt{37}$.

Table II

| Sample point | n=0 | n=1 | n=2 | n=3 | n=4 |
|---|---|---|---|---|---|
| Desired Signal | 0 | 0 | 0 | 1,1 | 1 |
| Noise | 2 | 2 | 2 | 2 | 2 |
| Received Signal | 2 | 2 | 2 | 4 | 3 |

Table III illustrates a scenario where the three acoustic signals arrive at the receiver at the same time instance. Accordingly, 1-norm of the received signal in this scenario is 13 and the 2-norm of the received signal is $\sqrt{41}$.

Table III

| Sample point | n=0 | n=1 | n=2 | n=3 | n=4 |
|---|---|---|---|---|---|
| Desired Signal | 0 | 0 | 0 | 0 | 1,1,1 |
| Noise | 2 | 2 | 2 | 2 | 2 |
| Received Signal | 2 | 2 | 2 | 2 | 5 |

From the Tables I, II, III it can be noticed at 1-norm of the received signal remains same irrespective of the time of arrival. On the other hand, the 2-norm of the received signal monotonically increases as the time of arrival of the acoustic signals gets synchronized.

A "controller" as used herein is a device for executing machine-readable instructions stored on a computer readable medium, for performing tasks and may comprise any one or combination of, hardware and firmware. For example, the controller may be implemented using a microcontroller, microprocessor, programmable logic controller, electronic devices, or other electronic units to perform the functions described herein or a combination thereof. The machine-readable instructions may be stored within the controller or external to the controller.

The embodiments described herein achieve in increasing the signal to noise ratio of a received signal by optimizing the transmission of the signals such that the signals are received at the same instance of time. The received signal with increased signal to noise ratio provides the advantage of estimating the time of flight of the signal more accurately and reliably. For example, the embodiments described herein can be used in an acoustic pyrometer to measure the temperature distribution over an area in a non-invasive way. Acoustic pyrometers are based on the principle that sound propagate with different velocity in different temperature. Example applications of acoustic pyrometer consist of measuring the temperature field across a blast furnace, gas turbines, etc.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

**Claims**

1. A method of estimating a time of flight of a signal, the method comprising:

   - transmitting a plurality of the signals (30) from a plurality of transmitters (15) such that the plurality of signals (30) travel different paths,
   - receiving the plurality of signals (30) at one or more receivers (20),
   wherein the plurality of signals (30) are transmitted such that the plurality of signals (30) are received at the same time instance, and
   - estimating the time of flight of a respective said plurality of signal (30) as a function of a time of reception of the plurality of signals (30) and a respective time instance of transmission of the respective said plurality of signal (30).

2. The method according to claim 1,
   wherein the transmission of the respective said plurality of signals (30) is triggered at different time instances.

3. The method according to claim 2,
   wherein the different time instances are determined responsive to a feedback of reception of the plurality of signals (30).

4. The method according to claim 3,
   wherein the different time instances are determined by applying a derivative free optimization technique.

5. The method according to any of the preceding claims 1 to 4,
   wherein the time instance of transmission of one of the plurality of signal (30) is a reference time and the respective time instances of transmission of the other plurality of signals (30) are delayed relative to the reference time by a respective time delay.

6. The method according to claim 5,
wherein the respective time of flight of the respective plurality of signals (30) is estimated by subtracting the respective time delay of transmission from the time of reception of the plurality of signals (30).

7. The method according to any of the preceding claims 1 to 6,
wherein the plurality of signals (30) are received at a single receiver (20).

8. The method according to any of the preceding claims 1 to 6,
wherein the plurality of signals (30) are received at a plurality of receivers (20).

9. The method according to claim 8, further comprising:

- filtering spatially a respective received signal outputted by the respective said plurality of receivers (20) to obtain a respective filtered signal, and
- combining the respective filtered signals to obtain an output signal (35), the output signal (35) representing the plurality of signals (30) transmitted.

10. The method according to any of the preceding claims 1 to 9,
further comprising estimating a profile of a physical parameter of a medium between the transmission and the reception of the plurality of signals (30) using the time of flight of the respective said plurality of signals.

11. The method according to any of the preceding claims 1 to 10,
wherein the plurality of signals (30) are one from the group consisting of an electromagnetic wave and mechanical wave.

12. The method according to any of the preceding claims 1 to 11,
wherein the method is applied to estimate a profile of a physical parameter of the medium.

13. The method according to claim 12, wherein the physical parameter is a velocity, a density, a temperature and/or the like of the medium.

14. A system (10) for estimating a time of flight of a signal, the system (10) comprising:

- a plurality of transmitters (15) for transmitting a plurality of signals (30) such that the plurality of signals (30) travel different paths,
- at least one receiver (20) adapted to receive the plurality of signals (30),
wherein the plurality of transmitters (15) are adapted to transmit the plurality of signals (30) such that the plurality of signals (30) are received at the at least one receiver (20) at the same time instance, and
- a controller (25) operably coupled to the at least one receiver (20) and adapted to estimate the time of flight of a respective said plurality of signals (30) as a function of a time of reception of the plurality of signals (30) and a respective time instance of transmission of the respective said plurality of signals (30).

15. The system according to claim 14,
wherein the plurality of transmitters (15) are controllable for transmitting the plurality of signals (30) at different time instances.

16. The system according to claim 15,
wherein the controller (25) is operably coupled to the plurality of transmitters (15), the controller (25) adapted to determine the different time instances responsive to a feedback of reception of the plurality of signals (30) and adapted to generate a respective control signal (45) to be provided to the respective plurality of transmitters (15) for triggering the transmission of the plurality of respective signals (30) at different time instances.

17. The system according to claim 16,
wherein the controller (25) is adapted to determine the different time instances by applying a derivative free optimization technique.

18. The system according to any of the preceding claims 14 to 17,
   wherein the controller (25) is configured to estimate a profile of a physical parameter of the medium within the area of interest.

19. The system according to claim 18,
   wherein the physical parameter is a velocity, a density, a temperature and/or the like of the medium.

FIG 1

FIG 2

FIG 3a

30c

30b

30a

FIG 3b

30c

30b

30a

FIG 3c

50    35

# FIG 4a

# FIG 4b

# FIG 4c

FIG 5

**EUROPEAN SEARCH REPORT**

Europäisches
Patentamt
European
Patent Office
Office européen
des brevets

Application Number

EP 13 15 7222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2012/150413 A1 (BUNCE RICHARD H [US] ET AL) 14 June 2012 (2012-06-14)<br>* abstract; figures *<br>* paragraph [0026] *<br>----- | 1,7-14,<br>18,19<br>2-6,<br>15-17 | INV.<br>G01K11/24<br>G01P5/24<br>G01N29/024<br>G01F1/66 |
| A | US 2010/186497 A1 (CHOISNET JOEL [FR])<br>29 July 2010 (2010-07-29)<br>* abstract; figures *<br>* paragraphs [0023] - [0032] *<br>----- | 1-19 | |
| A | US 4 882 934 A (LEFFERT CHARLES B [US] ET AL) 28 November 1989 (1989-11-28)<br>* column 9, lines 1-57 *<br>----- | 1-19 | |

TECHNICAL FIELDS
SEARCHED (IPC)

G01K
G01P
G01N
G01F

The present search report has been drawn up for all claims

| Place of search | Date of completion of the search | Examiner |
|---|---|---|
| The Hague | 29 November 2013 | de Bakker, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 7222

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2013

| Patent document cited in search report | | Publication date | Patent family member(s) | | Publication date |
|---|---|---|---|---|---|
| US 2012150413 | A1 | 14-06-2012 | NONE | | |
| US 2010186497 | A1 | 29-07-2010 | AT | 525659 T | 15-10-2011 |
| | | | CA | 2688964 A1 | 23-06-2010 |
| | | | CN | 101762374 A | 30-06-2010 |
| | | | EP | 2202525 A1 | 30-06-2010 |
| | | | ES | 2371810 T3 | 10-01-2012 |
| | | | FR | 2940454 A1 | 25-06-2010 |
| | | | US | 2010186497 A1 | 29-07-2010 |
| US 4882934 | A | 28-11-1989 | NONE | | |

EPO FORM P0459

For more details about this annex : see Official Journal of the European Patent Office, No. 12/82